(19) Europäisches Patentamt
European Patent Office
Office européen des brevets

(11) **EP 1 879 349 A1**

(12) **EUROPEAN PATENT APPLICATION**

(43) Date of publication:
**16.01.2008 Bulletin 2008/03**

(51) Int Cl.:
***H04L 29/06*** (2006.01)    ***H04L 12/26*** (2006.01)

(21) Application number: **06270068.7**

(22) Date of filing: **14.07.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Agilent Technologies, Inc.**
**Santa Clara, CA 95051 (US)**

(72) Inventors:
• **Garcia, Francisco**
**West Lothian, EH30 9TG (GB)**
• **Gardner, Robert**
**West Lothian, EH30 9TG (GB)**

(74) Representative: **Kurz, Peter et al**
**Agilent Technologies International Sàrl**
**29, rue de la Gare**
**1110 Morges (CH)**

(54) **Method of measuring packet loss**

(57)      A method of measuring loss of packets in a communications network (100) comprises the steps of: generating (300, 302, 304) a plurality of packets (400), each packet (400) having a routing header. The packets are configured (304) to follow a round-trip path in the network (100). The packets (400) are then sent by a network node (102) and at least a number of the packets (400) are subsequently received at the network node (102), whereupon the quantity of the at least the number of the packets (400) is evaluated. Together with knowledge of the quantity of packets (400) sent, the quantity of packets (400) received is used to determine a packet loss metric.

Figure 3

**Description**

The present invention relates to a method of measuring protocol data unit loss of the type that, for example, comprises sending a plurality of protocol data units from a first network node for receipt by a second network node. The present invention also relates to a protocol data unit loss measurement apparatus of the type that, for example, sends a plurality of protocol data units to a network node.

In the field of performance measurement for communications networks, so-called round-trip loss is defined as a percentage of packets sent by an initiating host for which corresponding return packets are not received by the initiating host within a certain timeout period and so the sent packets are deemed to have been "lost". Routine monitoring of round-trip loss (and delay) of packets across an Internet Protocol (IP) Backbone network of an IP Service Provider or Network Operator is an important function. Such round-trip loss statistics serve as key performance indicators of the IP Backbone network and are of great interest to network operators, service providers and customers alike, since it is desirable to minimise packet loss in the IP Backbone network.

In this respect, network congestion is one cause of packet loss in a network. When traffic loading on a part of the network exceeds the capacity of the part of the network, packets are buffered in queues. Since the buffers are of limited capacity, queue overflows occur, leading to some packets being dropped. Queue overflow can occur due to moderate overload of one or more queues over an extended amount of time or arrival of a sudden burst of traffic.

Another cause of the packet loss is corruption, or errors, where parts of a given packet are modified in-transit often due to noise experienced during propagation of electromagnetic, electrical or optical signals representing the given packet. At a node in the network that receives the packet, packet corruption can be detected by checksums at an appropriate layer in a protocol stack, the packet being corrected, if possible, or discarded by the node upon detection of the corruption.

Improper formation of a packet can also be a reason for the network node discarding the packet.

In a network, high rates of end-to-end packet loss relative to a threshold packet loss value can lead to degradation in the performance of an application of a user that communicates data between hosts in the network. Additionally, support for certain real-time applications can prove difficult where excessive packet loss is experienced, packet loss above a precise threshold constituting "excessive" depending upon the nature of the application.

Similarly, in relation to transport layer protocols, the larger the degree of packet loss, the harder it is for the transport layer protocols to sustain high data throughput. Loss is particularly problematic when the network is supporting real-time applications where the delay-bandwidth product is high. If the loss rate is too high, the quality of service may be degraded to unacceptable levels, as experienced at the receiving end.

In order to perform round-trip packet loss measurements in the IP Backbone network, dedicated monitoring functionality is deployed at key points of presence throughout the network, the monitoring functionality constantly checking the round-trip packet loss by sending short packets several hundred times an hour to all the other monitoring stations in the network.

One predominant known round-trip loss measurement technique for IP version 6 (IPv6) traffic employs the so-called Internet Control Message Protocol version 6 (ICMPv6) echo request/response feature, as used by the so-called "ping6" application, as defined in Request For Comments (RFC) 2463, the original intended purpose of the ICMP echo request/response feature being to determine availability of target network nodes. When measuring round-trip loss instead of availability, ICMPv6 echo request packets, with zero or more octets of arbitrary data, are sent by a source node to a destination node. When each ICMPv6 echo request packet arrives at the destination node, a corresponding ICMPv6 echo response packet is immediately sent back to the source, i.e. originating, node. If the source node does not receive the ICMPv6 echo response packet within a predetermined time period, the ICMPv6 echo request packet originally sent is deemed to have been "lost".

However, some routers handle ICMPv6 echo request packets differently to regular user traffic, resulting in a packet loss measure that is not indicative of a true loss as would be experienced by layers of a protocol stack above the network layer of the protocol stack. Thus, it is not possible to obtain a reliable measurement for the round-trip packet loss for IPv6 packets with an arbitrary payload type and length and variable rate using the ICMPv6 echo/response protocol.

Further, RFC 2680 notes that the measurement of one-way packet loss is favoured over measurement of round-trip packet loss.

According to a first aspect of the present invention, there is provided a method of measuring protocol data unit loss, the method comprising: generating a plurality of protocol data units, each of the plurality of protocol data units having a data structure definition supporting routing path selection; configuring the each of the plurality of protocol data units by setting a source address, a destination address and at least one routing address in the each of the plurality of protocol data units; sending the plurality of protocol data units from a source node associated with the source address; determining a quantity of protocol data units sent by quantifying the plurality of protocol data units; receiving a number of the plurality of protocol data units at the source node; determining a quantity of received protocol data units by quantifying the number of the plurality of protocol data units received; determining the protocol data unit loss using the quantity of the plurality of protocol data units sent and the quantity of the protocol data units received.

The source address, the destination address and the at least one routing address may correspond to a round-trip route from the source node via a target node.

Each of the plurality of protocol data units may comprise data identifying a position within the plurality of protocol data units.

The data identifying the position within the plurality of protocol data units may correspond to a sequence number.

The data identifying the position within the plurality of protocol data units may be temporal data.

The method may further comprise generating the plurality of protocol data units so that the each of the plurality of protocol data units comprises another data structure definition supporting an extendible schema arranged to support storage of the data identifying the position within the plurality of protocol data.

The each of the protocol data units may comprise an opaque object conforming to the extendible schema, the data identifying the position within the plurality of protocol data units being stored by the opaque object.

The method may further comprise: determining whether at least one of the plurality of protocol data units has been received within a predetermined period of time.

Each adjacent pair of protocol data units of the plurality of protocol data units may be sent with a respective inter-protocol data unit time internal therebetween.

The method may further comprise: generating the respective inter-protocol data unit time interval so as to have a random duration.

The method may further comprise: setting a parameter of the each of the plurality of protocol data units so as to cause the plurality of protocol data units to experience a predetermined quality of service.

The parameter of the each of the plurality of protocol data units may be set by setting a traffic class field or a flow label field of the each of the plurality of protocol data units.

The method may further comprise: measuring a round-trip delay associated with at least one of the plurality of protocol data units.

According to a second aspect of the present invention, there is provided a protocol data unit loss measurement apparatus comprising a processing resource, the processing resource comprising: a generation module arranged to generate, when in use, a plurality of protocol data units, each of the plurality of protocol data units having a data structure definition supporting routing path selection; a configuration module arranged to configure, when in use, the each of the plurality of protocol data units by setting a source address, a destination address and at least one routing address in the each of the plurality of protocol data units; a sender module arranged to send, when in use, the plurality of protocol data units, and determine, when in use, a quantity of the plurality of protocol data units sent by quantifying the plurality of protocol data units sent; a receiver module arranged, when in use, to receive a number of the plurality of protocol data units; and a measurement module arranged, when in use, to determine a quantity of the received protocol data units by quantifying the number of the plurality of protocol data units received, and the protocol data unit loss using the quantity of the plurality of protocol data units sent and the quantity of the protocol data units received.

According to a third aspect of the present invention, there is provided a protocol data unit measurement system comprising: the protocol data unit loss measurement apparatus as set forth above in relation to the second aspect of the present invention; and at least one network node associated with the at least one routing address.

It is thus possible to provide a method of measuring protocol data unit loss and a protocol data unit measurement apparatus that are capable of measuring loss of protocol data units independent of the higher layer protocol used, for example layers above the network layer of a protocol stack. Consequently, measurements can be performed for any chosen upper-layer protocol, thereby contributing to improved accuracy in reflecting the experience of real user data. Additionally, implementation with any size of payload can be achieved up to, for example, the minimum of the Maximum Transit Units (MTUs) threshold for respective segments of a path from a source node to a target node and back to the source node. Again, this contributes to improved accuracy in reflecting the experience of real user data. Additionally, it is possible to measure round-trip loss from the source node to one or more intermediate points in the network before the protocol data units return to the source node. It is also possible, when suitable instrumentation is provided, to measure separately end-to-end loss of protocol data units between node pairs along a path in the network followed by measurement packets. Further, by setting traffic class or flow label fields of the measurement packets, it is possible to obtain round-trip loss measurements associated with differentiated classes of service that can be offered by a Network Operator or Service Provider. Deployment of a service to measure loss of protocol data units is also simplified as dedicated measurement hardware does not have to be provided at target nodes participating in such loss measurements.

At least one embodiment of the invention will now be described, by way of example only, with reference to the accompanying drawings, in which:

**Figure 1** is a schematic diagram of part of a communications network;
**Figure 2** is a schematic diagram of a processing resource of a source host constituting an embodiment of the invention;

**Figure 3** is a flow diagram of a method of measuring loss of protocol data units using the processing resource of Figure 2 and constituting a first embodiment of the invention;

**Figure 4** is a schematic diagram of a data structure definition of protocol data units formed by the processing resource of Figure 2;

**Figure 5** is a flow diagram of a method used in conjunction with the method of Figure 3 in a second embodiment of the invention; and

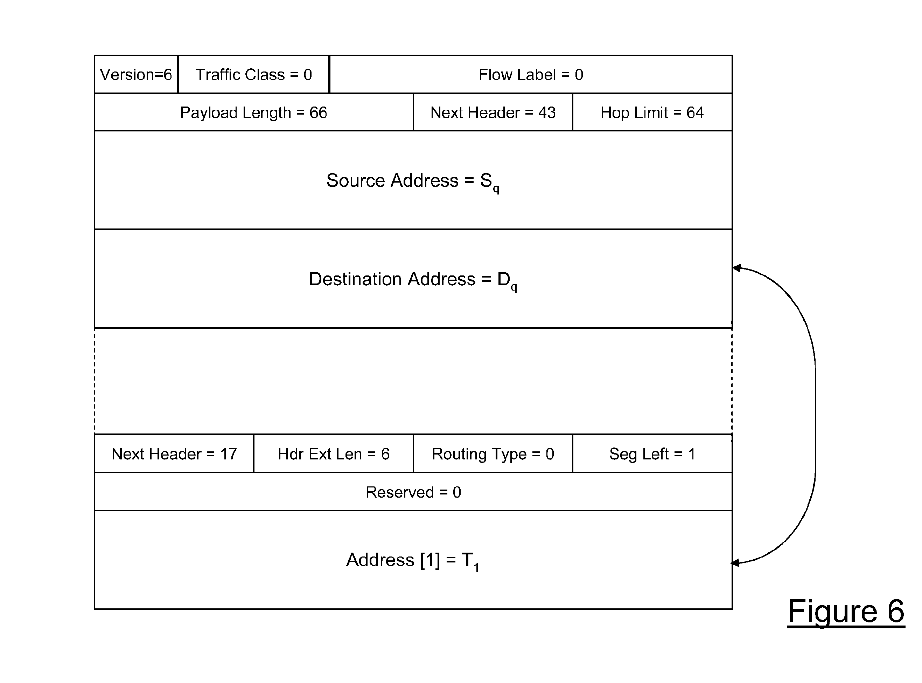

**Figure 6** is a schematic diagram of a manipulation of the data structure definition of Figure 4.

Throughout the following description identical reference numerals will be used to identify like parts.

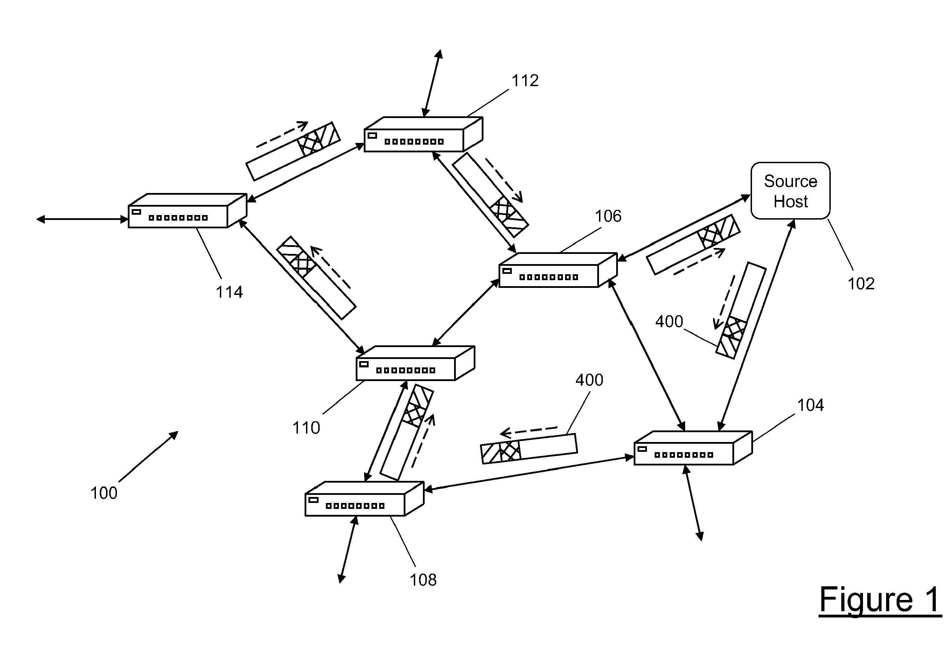

Referring to Figure 1, a part of a communications network 100, for example the Internet, comprises a source host 102 coupled to a first intermediate node 104 and a second intermediate node 106. The communications network 100 is an Internet Protocol (IP) network, in particular an IPv6 network.

The first intermediate node 104 is coupled to a third intermediate node 108 as well as the second intermediate node 106. Both the second intermediate node 106 and the third intermediate node 108 are coupled to a fourth intermediate node 110, the second intermediate node 106 also being coupled to a fifth intermediate node 112. Both the fourth and fifth intermediate nodes 110, 112 are coupled to a target, node 114. The target node 114 is a node to which packets are to be sent as part of a measurement process.

Although reference is made herein to "nodes", the skilled person will appreciate that the nodes can be hosts, routers, or other network elements with routing and forwarding capabilities, dependent upon the functionality required of the network element at a particular location of the network element in the communications network 100. In this example, the intermediate nodes 104, 106, 108, 110, 112 are routers supporting IPv6 protocol functionality.

In this example, the operation of the source host 102 is modified to perform certain functionality as is described hereinbelow. In contrast, the target node 114 is not, in this example, modified and is a router that performs normal routing and forwarding functionality expected of a router.

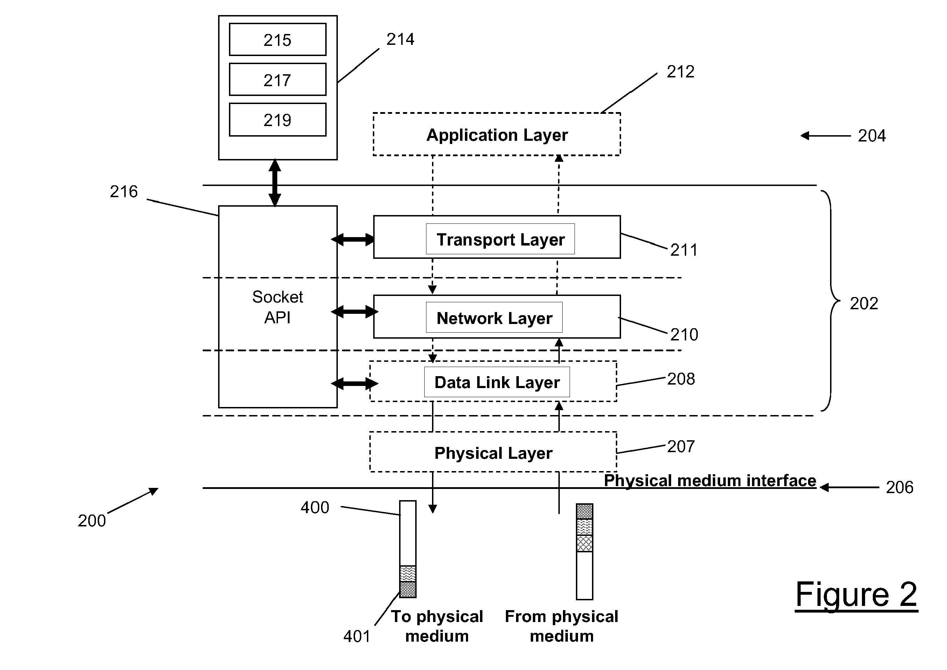

Referring to Figure 2, the source host 102 comprises a processing resource 200 consisting of, inter alia, at least one microprocessor (not shown), a volatile memory (not shown), for example a Random Access Memory (RAM), a non-volatile memory (not shown), for example a Read Only Memory (ROM). The processing resource 200 supports a kernel space 202, a part of the processing resource 200 being reserved for supporting a protocol stack. In this example, the protocol stack is implemented according to appropriate layers in the Open System Interconnection (OSI) seven-layer Reference Model. Additionally, the processing resource 200 supports a user space 204, a part of the processing resource 200 reserved for the execution of user applications, for example a video streaming server. The processing resource 200 also supports a physical medium interface 206.

In relation to the protocol stack, the protocol stack comprises, inter alia, a data link layer 208, network layer 210, transport layer 211, as well as upper layers, for example an Application Layer 212 (and other layers), and a Physical layer 207 below the Data Link layer 208.

Amongst the applications residing in the user space 204, there is a measurement application 214 for injecting measurement packets into the communications network 100. In this example, the measurement application comprises a generator module 215, a configuration module 217 and a measurement module 219.

The kernel space 202 supports a Socket Application Programming Interface (API) 216 in Figure 2. In this example, the socket API is implemented as a set of system calls that interact directly with the kernel space 202. The Socket API serves as an interface to the layers of the protocol stack. In this example, the Socket API 216 operates in accordance with RFC 2553 ("Basic Socket Interface Extensions for IPv6") and RFC 3542 ("Advanced Sockets Application Program Interface (API) for IPv6"). Further, whilst some operating systems only partially implement the Socket API as described in RFC 2553 and RFC 3542 using socket options and ancillary data, it is still nevertheless possible for a user to implement the full functionality of RFC 3542 using the kernel space 202. In the present example, the kernel space 202 implements the full functionality of the Socket API. In relation to other operating systems, for example Linux, the Socket API can be implemented as library functions.

In order to interact with an appropriate one or more of the Data Link layer 208, the Network layer 210 and/or the Transport layer 211, the measurement application 214 uses the Socket API 216 to interface to the correct one or more of the Date Link layer 208, the Network layer 210 and/or the Transport layer 211, as required by the first application 214.

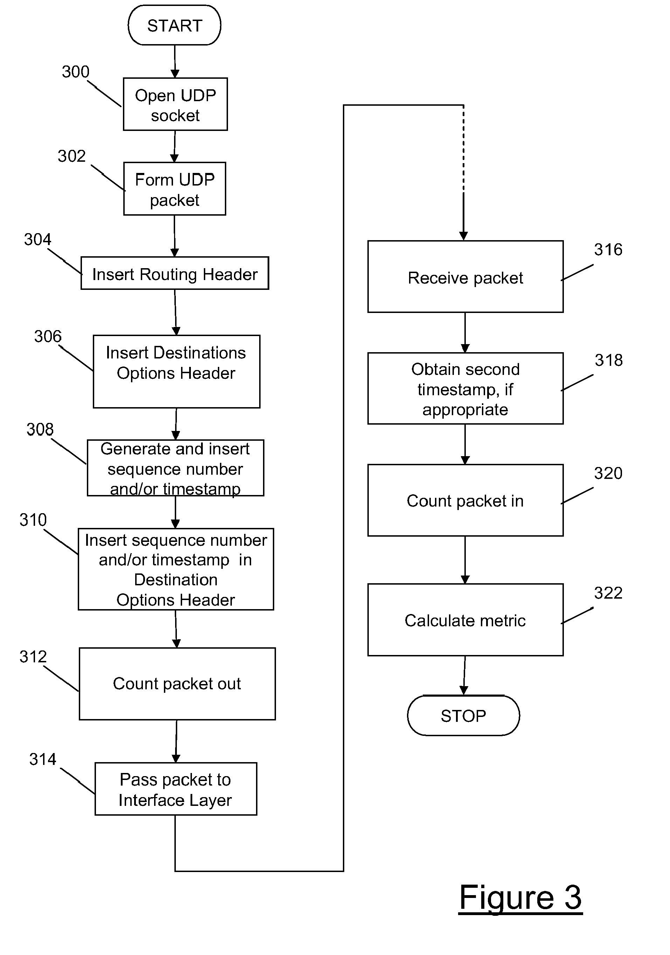

In operation (Figure 3), the measurement application 214 is arranged to perform a round-trip packet loss measurement. In order to perform the round-trip packet loss measurement, the measurement application 214 generates a plurality of packets. For the sake of clarity and conciseness of description, the formation of the plurality of packets will now be described with reference to formation of a single packet. However, the skilled person will appreciate that the process of packet communication described with reference to the single packet also applies to subsequent packets of the plurality of packets.

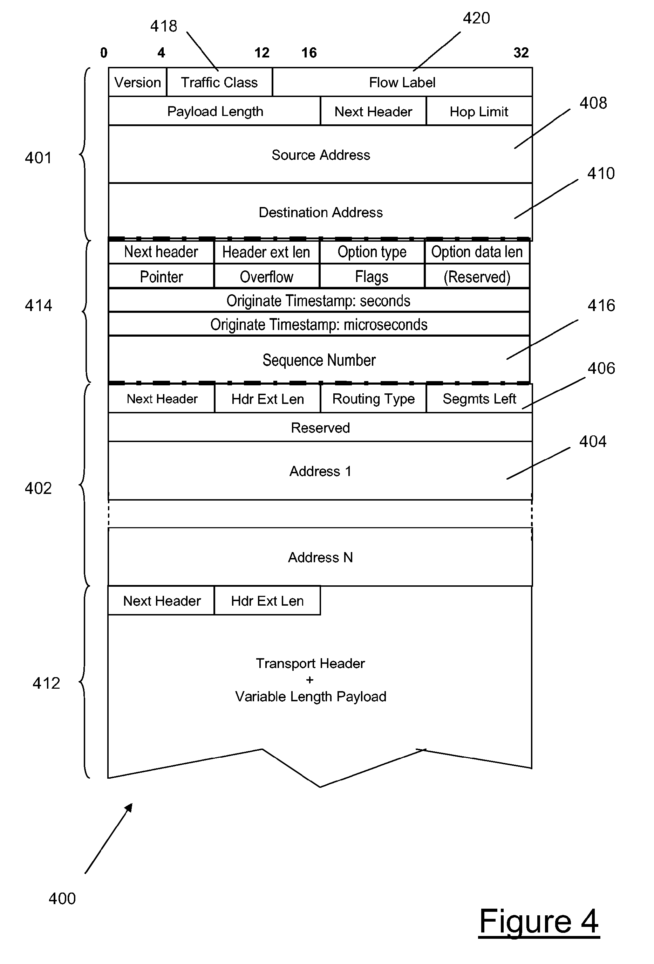

In order to form the packet, the measurement application 214 uses the Socket API 216 to open up a UDP socket (Step 300) at the transport layer 211. Through the UDP socket, the generator module 215 of the measurement application 214 instructs the transport layer 211 to form (Step 302) a UDP packet 400 (Figure 4) having an IPv6 fixed-size header 401.

In order for the packet 400 to be routed to the target node 114 and ensure return of the packet 400 from the target node 114, the configuration module 217 of the measurement application 214 uses the Socket API 216 to insert into the packet being created a first routing IP address corresponding to the target node 114. The first routing IP address is added by means of a routing header 402 (Step 304) that follows the fixed-size IPv6 header 401 of the packet 400. The Socket API 216 adds the first routing IP address as a first address field 404 of the routing header 402. A "segments left" field 406 of the packet 400 is also incremented to reflect the inclusion of the first routing IP address in the packet 400. Additionally, the measurement application 214 passes a source IP address via the Socket API 216 to the protocol stack, the source IP address corresponding to the source host 102. The source IP address is then provided in a source address field 408 of the packet 400 being formed, and the measurement application 214 also sets a destination address field 410 of the packet 400 being formed to the source IP address corresponding to the source host 102 to ensure return of the packet 400.

The routing header 402 of the packet 400 is followed by a transport header 412, in this example a UDP header, the transport header 412 being followed by a variable length payload.

In the present example, packets are sent by a node and, through the use of the routing header 402, returned to the same node via one or more intermediate routers.

In order to detect packet duplicates, IPv6 extension headers, as described in RFC 2460 (www.ietf.org/rfc/rfc2460.txt), are used, for example a so-called Destination Options Extension Header, which allow additional information to be included between the IPv6 fixed sized header 401 and the variable length payload of the packet 400. Consequently, a Destination Options Extension Header 414 is inserted (Step 306) between the main header 401 and the routing header 402 of the packet 400. However, it should be appreciated that other known extendible schemas can be employed in relation to protocols other than IP if recordal of data to enable duplicate packet detection necessitates the use of extendible schemas of other protocols.

Use of opaque objects, such as extension headers, in this way requires modifications and extensions to the existing IPv6 protocol stack employed in the source node 102 in order to support the functionality described above in relation to Figure 2. In this example, a Unix environment is used with user-defined dynamically loadable kernel modules that interface with respective points in the kernel protocol stack via appropriately located kernel "hooks" that are pre-compiled into the kernel protocol stack. Alternatively, the modifications and extensions can be achieved by applying a patch to source code of the kernel protocol stack and then recompiling the kernel. In this respect, the kernel is adapted in accordance with European Patent publication no. EP-A-1 401 147 in order to provide support for incorporation of data into the extension header of a packet. However, whilst Unix-based kernels can be employed, it is possible to use dynamically linkable libraries, available for other kernels such as various versions of Microsoft® Windows™, to achieve the same functionality as described herein.

A first sequence number is therefore is generated (Step 308) by the measurement application 214 in order to identify a position of the packet 400 within the plurality of packets sent, the sequence number being inserted (Step 310) into a sequence number field 416 of the Destination Options Extension Header 414. The sequence number, or unique packet index (based on an incrementing counter), can alternatively be inserted into the variable length payload of the packet 400, when formed in accordance with a compatible transport protocol (UDP in this example), instead of employing the Destination Options Extension Header 414 described above. Additionally, if required, the sequence number can be encrypted in order to avoid recognition of the sequence number during passage through the network 100. If also required, a traffic class field 418 and/or a flow label field 420 of the main header 401 can be set so that the packet experiences a predetermined QoS corresponding to the values of the traffic class field 418 and/or the flow label field 420. Further, the packet 400 can also be used to measure a round-trip delay if desired. In such circumstances, a timestamp can be generated (Step 308) by the measurement application 214 and inserted (Step 310) in the Destination Options Extension Header 414, if present and desired, or in the payload of the packet 400 if appropriate.

The packet is then counted (Step 312), i.e. in order to quantify the plurality of packets sent, thereby determining a quantity of sent packets prior to the packet formed thus far being passed (Step 314) from, as applicable, the Transport layer 211 to the Network layer 210 to the Data Link layer 208 to the Physical layer 207 before departure of a finally formed packet 400 from the source host 102.

In this respect, the Socket API 216 exchanges the first routing IP address corresponding to the target node 114 with the content of the destination IP address field 410, namely the source IP address corresponding to the source host 102, prior to forwarding of the packet 400.

The packet 400 then leaves the source host 102 at a mean rate determined by a packet interval and is forwarded to the target node 114. If desired, the packet interval can be a randomly generated time delay, which corresponds to the mean packet rate, inserted between adjacent packets of the plurality of packets when the packets are sent by the source node 102.

Upon receipt of each of the plurality of received packets 400, the target node 114 also exchanges the content of the first address field of the routing header 404, now the source IP address, with the content of the destination address field of the IPv6 header 410, namely the first routing IP address corresponding to the target node 114. Additionally, the segments left field 406 of the packet 400 is decremented by unity.

The target node 114 then forwards each of the received packets 400 back to the source IP address residing in the destination address field 410, i.e. the source host 102, via a return path. The return path, in this example, is not set in advance by the measurement application 214 and so is via an arbitrary number of nodes in the communications network 100.

Upon receipt (Step 316) of the packet 400 at the source host 102, the source host 102 can append (Step 318) a second timestamp to the variable length payload or insert the second timestamp in the Destination Options Extension Header 414 of the received packets, the second timestamp being indicative of a receipt time of the packets 400. Alternatively, the second timestamp can be generated by the measurement application 214 and simply compared with the first timestamp generated in order to determine transit time and hence delay of the packet 400.

During the journey of the plurality of packets 400 to the target node 114 and indeed also during a return journey from the target node 114 back to the source node 102, a proportion of the plurality of packets 400 can be "lost", for example discarded by a network element en-route, for example the target node 114. Consequently, only a number of the plurality of packets returns back to the source node 102. The number of the plurality of packets 400 that are received by the source node 102 pass up through the protocol stack in the kernel space 202 of the processing resource 200 to the application layer 212, via the Socket API 216, where the measurement application 214 counts (Step 320) the number of the plurality of packets 400 received, i.e. quantifies the number of the plurality of packets received.

Once the quantity of received packets is determined, this measurement can be used by the measurement module 219 of the measurement application 214 along with the knowledge of the number of packets sent in order to calculate (Step 322) a Packet Error Ratio (PER) based upon the following equation:

$$\text{PER} \quad = \quad \text{packets\_not\_returned} / \text{packets\_sent}$$

$$= \quad (\text{packets\_sent} - \text{packets\_returned}) / \text{packets\_sent}$$

Whilst the timestamps mentioned above can be employed to determine round-trip delay, if required, the timestamp data can additionally or alternatively be employed to determine whether a given received packet is deemed "lost". In this respect, the timestamp data (the first and second timestamps) can be extracted by the measurement application 214 (the second timestamp optionally being generated by the measurement application 214 as described above) from each packet received and used to calculate a transit time that can be compared with a predetermined (timeout) threshold constituting an acceptable return transit time for each received packet. If the transit time exceeds the predetermined threshold, the received packet is deemed "lost" and not counted amongst the number of the plurality of packets 400 received.

In another embodiment, the plurality of packets follows a predetermined outbound path to the target node 114 via a predetermined series of network nodes. In this example, the predetermined outbound path requires the plurality of packets to pass via the first intermediate node 104, the third intermediate node 118 and the fourth intermediate node 110. Consequently, the routing header 402 is augmented with a first routing address, $T_1$, corresponding to the first intermediate node 104, a second routing address, $T_2$, corresponding to the third intermediate node 108, a third routing address, $T_3$, corresponding to the fourth intermediate node 110, and a fourth routing address, $T_4$, corresponding to the target node 114. The first, second, third and fourth routing addresses $T_1$, $T_2$, $T_3$, $T_4$ constitute a queue of routing addresses. As in relation to the previous embodiment, the source address field 408 of the packet 400 is set to a source IP address $S_q$ and the destination field 410 of the packet 400 is set to a destination IP address, $D_q$. In this example, the source IP address $S_q$ and the destination IP address $D_q$ correspond to the same network node, namely the source host 102. Further, in this example the source IP address $S_q$ and the destination IP address $D_q$ are identical. The segments left field 406 of the packet 400 is also appropriately set to reflect the inclusion of the first, second and third routing IP addresses $T_1$, $T_2$, $T_3$ in the packet 400.

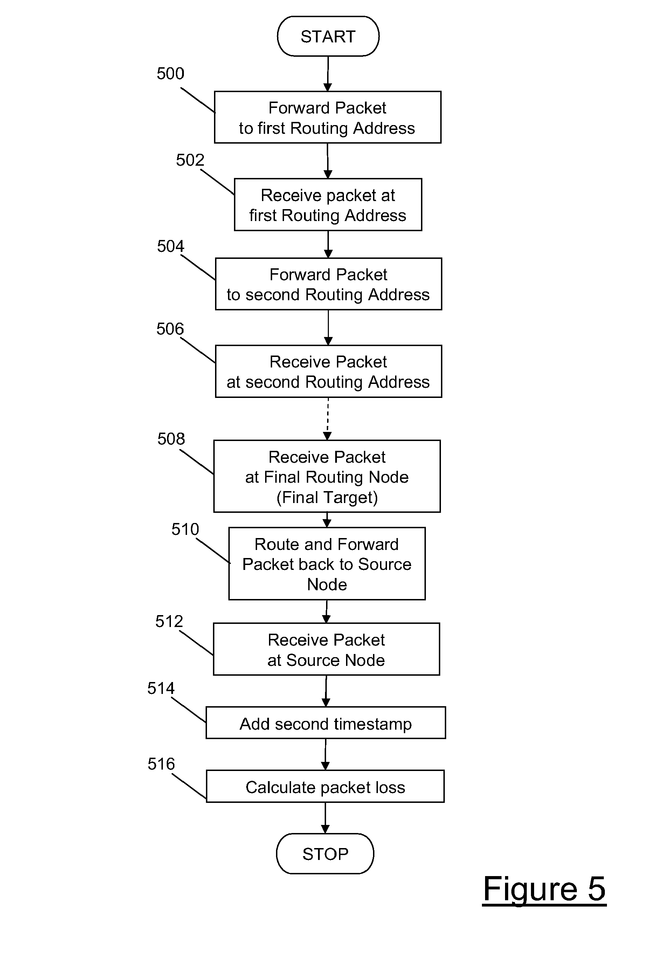

Referring to Figure 5, the Socket API 216 exchanges the first routing address, $T_1$, with the content of the destination IP address field 410, namely the destination IP address, Dq prior to the packet 400 being forwarded. The second, third and fourth routing addresses $T_2$, $T_3$, $T_4$ are shifted up the queue of routing addresses so that the absence of the first routing address, $T_1$, in the routing header is filled; the place of the fourth routing address, $T_4$, is filled by the destination IP address, $D_q$.

Consequently, the packet 400 is forwarded (Step 500) to the first routing address, $T_1$, corresponding to the first intermediate node 104. Thereafter, the first intermediate node 104 receives (Step 502) the packet 400, whereupon the first intermediate node 104 replaces the first routing address T$_1$, residing in the destination address field 410 with the second routing address, T$_2$, from the routing header and places the first routing address, T$_1$, in the place in the queue of routing addresses vacated by the second routing address, T$_2$. Additionally, the segments left field 406 of the packet 400 is decremented by unity. The packet 400 is then forwarded (Step 504) to the third intermediate node 108 corresponding to the second routing address, T$_2$. The above described functionality in relation to the first intermediate node 104 is simply the normal functionality performed by a router and so it should be appreciated that the first intermediate node is not provided with any additional functionality specifically to support the product loss measurement.

Thereafter, the packet 400 is received (Step 506) by the third intermediate node 108. The third intermediate node 108 replaces the second routing address T$_2$, residing in the destination address field 410 with the third routing address, T$_3$, from the routing header 402 and places the second routing address, T$_2$, in the place in the queue of routing addresses vacated by the third routing address, T$_3$. Additionally, the segments left field 406 of the packet 400 is again decremented by unity. The packet 400 is then forwarded to the fourth intermediate node 110 corresponding to the third routing address, T$_3$.

The above process is repeated until the packet 400 reaches (Step 508) the target node 114, (address T$_4$) whereupon the target node 114 recognises that the segments left field 406 has reached unity and so a final routing address, namely the destination IP address, D$_q$, corresponding to the source host 102, only remains. Once again, the above described procedure for manipulating the destination address field 410 is performed in relation to the content of the destination address field 410, namely the fourth routing address, T$_4$, is exchanged with the destination IP address, D$_q$, corresponding to the source host 102. In this respect, the destination address field 410 is set to the destination IP address, D$_q$, stored in the routing header 402 and the place of the destination IP address, D$_q$, previously occupied in the routing header 402 is filled by the fourth routing address, T$_4$, previously stored in the destination address field 410. Thereafter, the target node 114, in accordance with the normal routing behaviour of the target node 114, forwards (Step 510) the packet 400 to the source host 102.

Once the packet 400 arrives back to the source host 102, the source host 102 then receives (Step 512) the packet 400 and appends (Step 514) a second timestamp to the variable length payload or inserts the second timestamp into the Destination Options Extension Header 414, the second timestamp being indicative of a receipt time of the packet 400. Alternatively, the second timestamp can be generated by the measurement application 214 and simply compared with the first timestamp generated. Of course, the skilled person will appreciate that the return path from the target node 114 back to the source host 102 can be predefined by the provision of further routing addresses in the routing header 402, thereby causing the packet 400 to return to the source host 102 via predetermined intermediate nodes, for example, via the fifth and second intermediate nodes 112, 106, or more likely the first, third and fourth intermediate nodes 104, 108, 110.

In an analogous manner to that described above in relation to the previous embodiment, the above-described steps are performed in relation to each of the plurality of packets mentioned above, the plurality of packets constituting test packets for the packet loss measurement. Subsequently, the quantities of sent and received packets are used to calculate (Step 516) the PER.

Although the above examples have been described in the context of packet communications, it should be appreciated that the term "packet" is an example of a protocol data unit that can be used in relation to the above embodiments. Further, other types of protocol data units can be employed, for example: datagrams, frames, and cells and so these terms should be understood to be interchangeable.

Although the above embodiments have been described in the context of IPv6, the skilled person will appreciate that the above described techniques can be applied in the context of other communications protocols that support source-based routing.

Alternative embodiments of the invention can be implemented as a computer program product for use with a computer system, the computer program product being, for example, a series of computer instructions stored on a tangible data recording medium, such as a diskette, CD-ROM, ROM, or fixed disk, or embodied in a computer data signal, the signal being transmitted over a tangible medium or a wireless medium, for example, microwave or infrared. The series of computer instructions can constitute all or part of the functionality described above, and can also be stored in any memory device, volatile or non-volatile, such as semiconductor, magnetic, optical or other memory device.

**Claims**

**1.** A method of measuring protocol data unit loss, the method **characterised by**:

> generating (300, 302, 304) a plurality of protocol data units (400), each of the plurality of protocol data units having a data structure definition supporting routing path selection (402);
> configuring (304) the each of the plurality of protocol data units (400) by setting a source address, a destination address and at least one routing address in the each of the plurality of protocol data units;

sending (312, 500) the plurality of protocol data units (400) from a source node (102) associated with the source address;

determining (312) a quantity of protocol data units sent by quantifying the plurality of protocol data units (400);

receiving (512) a number of the plurality of protocol data units (400) at the source node (102);

determining (320) a quantity of received protocol data units (400) by quantifying the number of the plurality of protocol data units (400) received;

determining (516) the protocol data unit loss using the quantity of the plurality of protocol data units sent and the quantity of the protocol data units (400) received.

2. A method as claimed in Claim 1, wherein the source address, the destination address and the at least one routing address correspond to a round-trip route from the source node (102) via a target node (114).

3. A method as claimed in Claims 1 and 2, wherein each of the plurality of protocol data units (400) comprises data identifying a position within the plurality of protocol data units.

4. A method as claimed in Claim 3, wherein the data identifying the position within the plurality of protocol data units (400) corresponds to a sequence number (416).

5. A method as claimed in Claim 3, wherein the data identifying the position within the plurality of protocol data units (400) is temporal data.

6. A method as claimed in Claims 3, 4 or 5, further comprising:

generating (300, 302, 304) the plurality of protocol data units so that the each of the plurality of protocol data units comprises another data structure definition supporting an extendible schema (414) arranged to support storage of the data identifying the position within the plurality of protocol data units (400).

7. A method as claimed in Claim 5, further comprising:

determining whether at least one of the plurality of protocol data units (400) has been received within a predetermined period of time.

8. A method as claimed in any one of the preceding claims, wherein each adjacent pair of protocol data units of the plurality of protocol data units (400) are sent with a respective inter-protocol data unit time internal therebetween.

9. A method as claimed in Claim 8, further comprising:

generating the respective inter-protocol data unit time interval so as to have a random duration.

10. A method as claimed in any one of the preceding claims, further comprising:

setting a parameter of the each of the plurality of protocol data units (400) so as to cause the plurality of protocol data units to experience a predetermined quality of service.

11. A method as claimed in Claim 10, wherein the parameter of the each of the plurality of protocol data units (400) is set by setting a traffic class field or a flow label field of the each of the plurality of protocol data units (400).

12. A protocol data unit loss measurement apparatus comprising a processing resource (200), the processing resource (200) **characterised by**:

a generation module (215) arranged to generate, when in use, a plurality of protocol data units (400), each of the plurality of protocol data units (400) having a data structure definition supporting routing path selection;

a configuration module (217) arranged to configure, when in use, the each of the plurality of protocol data units (400) by setting a source address, a destination address and at least one routing address in the each of the plurality of protocol data units (400);

a sender module (208) arranged to send, when in use, the plurality of protocol data units (400), and determine (312), when in use, a quantity of the plurality of protocol data units (400) sent by quantifying the plurality of protocol data units (400) sent;

a receiver module (208) arranged, when in use, to receive a number of the plurality of protocol data units (400); and a measurement module (219) arranged, when in use, to determine (320) a quantity of the received protocol data units (400) by quantifying the number of the plurality of protocol data units (400) received, and the protocol data unit loss using the quantity of the plurality of protocol data units (400) sent and the quantity of the protocol data units (400) received.

13. A protocol data unit measurement system comprising:

the protocol data unit loss measurement apparatus as claimed in Claim 12; and
at least one network node (114) associated with the at least one routing address.

Figure 1

**Figure 2**

Figure 3

418    420

| 0 | 4 | 12 | 16 | 32 |
|---|---|---|---|---|

| Version | Traffic Class | Flow Label | | |
|---|---|---|---|---|
| Payload Length | | Next Header | Hop Limit | |
| Source Address | | | | |
| Destination Address | | | | |

401

408

410

| Next header | Header ext len | Option type | Option data len |
|---|---|---|---|
| Pointer | Overflow | Flags | (Reserved) |
| Originate Timestamp: seconds | | | |
| Originate Timestamp: microseconds | | | |
| Sequence Number | | | |

414

416

406

| Next Header | Hdr Ext Len | Routing Type | Segmts Left |
|---|---|---|---|
| Reserved | | | |
| Address 1 | | | |
| Address N | | | |

404

402

| Next Header | Hdr Ext Len |
|---|---|

Transport Header
+
Variable Length Payload

412

400

# Figure 4

START

500 Forward Packet
to first Routing Address

502 Receive packet at
first Routing Address

504 Forward Packet
to second Routing Address

506 Receive Packet
at second Routing Address

508 Receive Packet
at Final Routing Node
(Final Target)

510 Route and Forward
Packet back to Source
Node

512 Receive Packet
at Source Node

514 Add second timestamp

516 Calculate packet loss

STOP

## Figure 5

EP 1 879 349 A1

| Version=6 | Traffic Class = 0 | Flow Label = 0 | |
|---|---|---|---|
| Payload Length = 66 | | Next Header = 43 | Hop Limit = 64 |

Source Address = $S_q$

Destination Address = $D_q$

| Next Header = 17 | Hdr Ext Len = 6 | Routing Type = 0 | Seg Left = 1 |
|---|---|---|---|
| Reserved = 0 | | | |

Address [1] = $T_1$

## Figure 6

**European Patent Office**

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PEZAROS D P ET AL: "Service Quality Measurements for IPv6 Inter-networks" INTERNET CITATION, [Online] 7 June 2004 (2004-06-07), XP007901778 Retrieved from the Internet: URL:http://ieeexplore.ieee.org/iel5/9152/2 9055/01309369.pdf?arnumber=1309369> [retrieved on 2007-02-23] sections III-V ----- | 1-13 | INV. H04L29/06 ADD. H04L12/26 |
| D,X | EP 1 401 147 A (AGILENT TECHNOLOGIES INC [US]) 24 March 2004 (2004-03-24) * paragraphs [0025], [0031] * * paragraphs [0048], [0049] * ----- | 1-13 | |
| A | JAE-HOON JEONG JUNG-SOO PARK SEUNG-YUN LEE YONG-JIN KIM ETRI: "One-way Delay Measurement using IPv6 Source Routing <draft-jeong-1way-delay-ipv6-source-routin g-00.txt>" IETF STANDARD-WORKING-DRAFT, INTERNET ENGINEERING TASK FORCE, IETF, CH, February 2002 (2002-02), XP015003796 ISSN: 0000-0004 * the whole document * ----- | 1-13 | TECHNICAL FIELDS SEARCHED (IPC) H04L |

The present search report has been drawn up for all claims

| Place of search | Date of completion of the search | Examiner |
|---|---|---|
| Munich | 1 March 2007 | de la Peña, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...........................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 27 0068

This annex lists the patent family members relating to the patent documents cited in the above-mentioned European search report.
The members are as contained in the European Patent Office EDP file on
The European Patent Office is in no way liable for these particulars which are merely given for the purpose of information.

01-03-2007

| Patent document cited in search report | | Publication date | Patent family member(s) | | Publication date |
|---|---|---|---|---|---|
| EP 1401147 | A | 24-03-2004 | CN | 1492630 A | 28-04-2004 |
| | | | JP | 2004112791 A | 08-04-2004 |
| | | | US | 2004052259 A1 | 18-03-2004 |

EPO FORM P0459

For more details about this annex : see Official Journal of the European Patent Office, No. 12/82

**EP 1 879 349 A1**

**REFERENCES CITED IN THE DESCRIPTION**

**Patent documents cited in the description**

- EP 1401147 A